# EUROPÄISCHE PATENTSCHRIFT

(11) **EP 3 149 111 B1**
(45) Veröffentlichungstag und Bekanntmachung des Hinweises auf die Patenterteilung: **08.07.2020**
(21) Anmeldenummer: 15750623.9
(22) Anmeldetag: 26.05.2015
(51) Int. Cl.: B29B 17/02, B09B 3/00, C10B 53/07, C10G 1/10, C10B 47/46

(54) **VERFAHREN DER AUFBEREITUNG VON POLYMEREN ABFÄLLEN**
METHOD OF PROCESSING POLYMER WASTE
MÉTHODE DE TRAITEMENT DE DÉCHETS POLYMÈRES

(30) Priorität: 26.05.2014 DE 102014007595
(43) Veröffentlichungstag der Anmeldung: 05.04.2017
(73) Patentinhaber: Hubbes, Hilmar, 32791 Lage (DE)
(72) Erfinder: Hubbes, Hilmar, 32791 Lage (DE)
(74) Vertreter: Rieke, Andreas
(86) Internationale Anmeldenummer: PCT/DE2015/000257
(87) Internationale Veröffentlichungsnummer: WO 2015/180704

(56) Entgegenhaltungen:
- EP-A1- 0 795 594
- EP-A2- 1 559 767
- EP-A2- 2 050 808
- WO-A1-2009/103254
- WO-A2-2010/012275
- CN-A- 103 351 883
- DE-A1- 10 348 987
- DE-U1-202013 105 519
- US-A1- 2005 234 274

## Beschreibung

Die Erfindung betrifft ein Verfahren der Aufbereitung von polymeren und/oder organischen Abfällen, insbesondere von Gummiabfällen und Bambusspänen.

Verfahren der Aufbereitung von polymeren Abfällen, insbesondere von Gummiabfällen beispielsweise aus Fahrzeugreifen oder der gummiverarbeitenden Industrie, sind vielfältig bekannt. Nach einer geeigneten Vorbereitung, insbesondere einer Reinigung und einer Zerkleinerung, erfolgt regelmäßig eine thermische Behandlung der Abfälle. Diese thermischen Behandlungen sind durchaus unterschiedlich. So wird in der DE 28 26 918 A1 vorgeschlagen, dass eine thermische Zersetzung und Teilvergasung der Abfälle in einer Wirbelschicht durchgeführt wird. Die DE 697 08 140 T2 und die DE 698 25 069 T2 erläutern Pyrolyseverfahren. Zwar offenbart insbesondere die DE 698 25 069 T2 einen geschlossenen Prozess für die Entsorgung von Gummiabfällen, jedoch ist dieser aufwändig und ist die Rückgewinnung von Prozessenergie durch Verbrennen insbesondere auch schwefelhaltiger Gase nicht unproblematisch. Ein ähnliches Verfahren ist aus der DE 101 50 696 A1 bekannt geworden, bei dem die Gummiabfälle einer Vorwärmung unterzogen werden, bevor sie in einen Schwelreaktor eingebracht werden. Nach einem Erhitzen wird der Schwelreaktor samt Inhalt langsam abgekühlt und muss für die nächste Charge erneut aufgeheizt werden.

Vergleichbare Aufbereitungsverfahren sind auch bei organischen Abfällen bekannt. So erläutert die DE 10 2005 038 827 A1 ein Pyrolyseverfahren für die Umwandlung von Bambusabfällen in eine künstliche Kohle. Daran schließt sich eine Zerkleinerung und erneute Bindung der Kohle mit einem Bindemittel an. Nach einem erneutem Erhitzen und einer Karbonisierung der Kohle kann diese für Adsorptionszwecke verwendet werden.

Auch die DE 103 48 987 A1 offenbart eine zweistufige thermische Behandlung. Nach einer Vorbehandlung in einer von den Abgasen eines Pyrolyseofens beheizten Vorwärmkammer erfolgt dort das Umsetzen eines Reaktionsbehälters in den Pyrolyseofen und schließt diesen mit einem speziell ausgebildeten Reaktionsbehälterdeckel nach oben ab. Dies verteuert zum einen die Herstellung eines solchen Reaktionsbehälters und ist insbesondere auch energetisch ungünstig, da ab der Entnahme eines Prozesscontainers bis zu dem vollständigen Einsatz eines nachfolgenden Prozesscontainers der Pyrolyseofen geöffnet verbleibt. Auch die Trennung des während der Pyrolyse entstehenden Gases in ein kondensiertes Pyrolyseöl und ein Pyrolysegas, das abgefackelt wird, ist in energetischer Hinsicht nicht optimal.

Vor diesem Hintergrund macht die Erfindung es sich zur Aufgabe, ein energetisch günstiges, aber leistungsfähiges und dennoch umweltfreundliches Verfahren für die Aufbereitung von polymeren und/oder organischen Abfällen wie Gummiabfällen und Bambusspänen zur Verfügung zu stellen.

Gelöst wird diese technische Problematik durch die Verfahrensschritte gemäß des Anspruchs 1.

Demnach ist in einem ersten Verfahrensschritt vorgesehen, dass ein hitzebeständiger und mit einem Ventil versehener Prozesscontainer mit geeignet vorbereiteten Abfällen in wenigstens einem gitterartigen Einsatz gefüllt und gasdicht verschlossen wird. Die Vorbereitung der Gummiabfälle umfasst im wesentlichen das Entfernen von Fremdkörpern, beispielsweise von Felgen bei Autoreifen, oder anderem, offensichtlich ungeeignetem Material. Gegebenenfalls kann auch eine Reinigung erforderlich sein. Insbesondere ist bei Autoreifen jedoch daran gedacht, diese auch zu zerkleinern. Für das Zerkleinern hat sich eine Schneidpresse bewährt, bei der der Pressenstempel von Schneiden durchsetzt wird.

Entsprechendes gilt für organische Abfälle. So sind auch Holz- oder Bambusabfälle zu zerkleinern und gegebenenfalls zu trockenen und möglichst frei von Fremdkörpern in den Prozesscontainer einzubringen.

Die so vorbereiteten Abfälle verbleiben über den gesamten Prozess der Aufbereitung in dem Prozesscontainer, der für die thermische Belastung entsprechend ausgelegt sein muss, da in einem zweiten Verfahrensschritt der Prozesscontainer mit den Abfällen für eine thermische Behandlung in einen Prozessofen verbracht wird. Während der thermischen Behandlung erfolgt über das Ventil eine Entgasung der Abfälle.

Anders als bei herkömmlichen Verfahren wird nicht ein Ofen oder ein Flammrohr unmittelbar mit dem Abfall gefüllt, der oder das dann nach der Entgasung abgekühlt und entleert werden muss. Vielmehr verbleiben die entgasten Abfälle für die nachfolgenden Verfahrensschritte innerhalb des Prozesscontainers.

Dieser wird unmittelbar nach der Entgasung, angezeigt beispielsweise von Sensoren, aus dem Prozessofen in eine Abkühlkammer umgesetzt, in der die Restwärme des Prozesscontainers mit Inhalt entzogen wird.

Damit steht der Prozessofen sofort nach dem Umsetzen des Prozesscontainers mit entgasten Abfällen für eine erneute Beschickung bereit, ohne dass er abgekühlt werden muss.

Die dem Prozesscontainer entzogene Restwärme wird in einem Thermospeicher abgespeichert und steht so als weiterverwendbare Prozesswärme zur Verfügung.

Ist der Prozesscontainer nebst Inhalt ausreichend abgekühlt, kann der Inhalt für eine Weiterverarbeitung in eine Trennvorrichtung entleert werden.

Das bei dem Aufheizen über eine an das Ventil angeschlossene Rohrleitung abgezogene Gas wird abgekühlt und vollständig verflüssigt in Behältern für eine Weiterverwendung zwischengelagert. Das durch die Abkühlung entstandene Öl ist trotz des hohen Schwefelanteils ein wertvoller Grundstoff für die chemische Industrie.

Weiter ist vorgesehen, dass die Abkühlkammer nach Art eines Wärmetauschers ausgebildet mit einer Vielzahl von Rohren versehen ist, dass die Rohre wenigstens einen Kreislauf für ein Thermalöl ausbilden und dass in dem Kreislauf des Thermalöls der Thermospeicher vorgesehen ist. Insbesondere ist dabei daran gedacht, mehrere Kreisläufe von verschiedenen Temperaturniveaus vorzusehen, aus deren Thermospeichern dann geeignet Prozesswärme entzogen werden kann.

Für das Verbringen des Prozesscontainers in den Prozessofen bzw. aus dem Prozessofen in die Abkühlkammer bieten sich zwei Alternativen an.

So kann zum einen vorgesehen werden, dass der Prozesscontainer stirnseitig einen Anschluss für ein Zugmittel aufweist, dass der Prozesscontainer von dem Zugmittel gezogen durch ein erstes Tor in den Prozessofen verbracht wird, dass nach der Entgasung der Prozesscontainer von einem Zugmittel durch ein dem ersten Tor des Prozessofens gegenüberliegendes zweites Tor durch ein gegenüber liegendes erstes Tor in die Abkühlkammer gezogen wird und dass nach der Abkühlung der Prozesscontainer von einem Zugmittel durch ein dem ersten Tor der Abkühlkammer gegenüber liegendes zweites Tor gezogen wird.

Zwar ist ein Ziehen des Prozesscontainers auf Kufen durchaus machbar, jedoch werden zweckmäßigerweise Prozesscontainer mit Rollen oder Rädern versehen sein, die gegebenenfalls in oder auf Gleisen ablaufen, so dass ein seitliches Ausbrechen des Prozesscontainers bei dem Ziehen sicher vermieden ist.

Alternativ besteht die Möglichkeit, dass der Prozesscontainer oberseitig wenigstens einen Anschluss für ein Hebezeug oder einen Kran aufweist, dass der Prozesscontainer von einem Hebezeug oder einem Kran angehoben durch ein erstes Tor in den Prozessofen verbracht wird, dass nach der Entgasung der Prozesscontainer von einem Hebezeug oder einem Kran durch ein dem ersten Tor des Prozessofens gegenüberliegendes zweites Tor durch ein gegenüber liegendes erstes Tor in die Abkühlkammer verbracht wird und dass nach der Abkühlung der Prozesscontainer von einem Hebezeug oder einem Kran durch ein dem ersten Tor der Abkühlkammer gegenüberliegendes zweites Tor verbracht wird.

Dabei kann beispielsweise an einen Deckenkran gedacht sein, an dessen Schiene(n) gegebenenfalls auch mehrere Laufkatzen verfahren werden können.

Unabhängig von der Art der Beschickung des Prozessofens und der Abkühlkammer sind die hintereinander liegenden Tore von Vorteil, da der Prozess gleichsam inline erfolgt, mithin in einer Richtung erfolgt und damit, trotz der diskontinuierlichen Beschickung, ein hoher Durchsatz erreicht werden kann. Dies gilt insbesondere dann, wenn mehrere Zugmittel, Hebezeuge oder Kräne vorgesehen sind, durch die die Prozesscontainer gleichzeitig umgesetzt werden.

Durch diese Maßnahmen kann weiter der Prozessofen und/oder die Abkühlkammer kontinuierlich betrieben werden. Ein Abkühlen insbesondere des Prozessofens und ein erneutes Aufheizen wird so vermieden.

Dies wird durch die schnellen Wechsel bzw. das schnelle Beschicken mit Prozesscontainern unabhängig von der Art der Beschickung erreicht.

Weiter von Vorteil ist das Vorhersehen eines gegenüber einer Befüllöffnung angeordneten Anschlusses, an dem ein Hebezeug oder Kran für ein Entleeren des Prozesscontainers in die Trennvorrichtung angreifen kann.

Die Trennvorrichtung dient dem Separieren der entgasten und abgekühlten Abfälle. Hierzu weist die Trennvorrichtung einen Metallabscheider und Siebe verschiedener Maschenweite auf. Durch den Metallabscheider werden beispielsweise die Stücke von Stahlgürteln bei Autoreifen oder dergleichen entfernt. Siebe unterschiedlicher Maschenweite stellen entgaste und abgekühlte Abfälle verschiedener, vorgebbarer Größe zur Verfügung.

Insbesondere ist daran gedacht, dass die feinste Fraktion noch zusätzlich einer Kugelmühle zugeführt wird und dass das Mahlgut der Kugelmühle über ein Sieb einem Walzenstuhl zugeführt wird. Als Sieb findet dabei insbesondere ein Trommelsieb Verwendung, so dass dem Walzenstuhl feinstkörniges Material einer Partikelgröße von 0,1 µm bis 0,5 µm letztlich entnommen werden kann.

Das Wesen der Erfindung wird anhand der Zeichnung näher erläutert, in der der Prozessablauf schematisch und nicht maßstabsgerecht dargestellt ist. In der Zeichnung zeigt:
Fig. 1: einen Prozessbehälter in einer Seitenansicht,
Fig. 2: ein weiteres Ausführungsbeispiel eines Prozessbehälters, teilweise geschnitten,
Fig. 3: eine Ausführungsform eines Prozessbehälters, die nicht Teil der Erfindung ist, teilweise geschnitten,
Fig. 4: dient der Erläuterung der thermischen Behandlung und Abkühlung der in Prozessbehältern befindlichen Gummiabfälle und
Fig. 5: dient der Erläuterung der Verarbeitung der entgasten und abgekühlten Partikel.

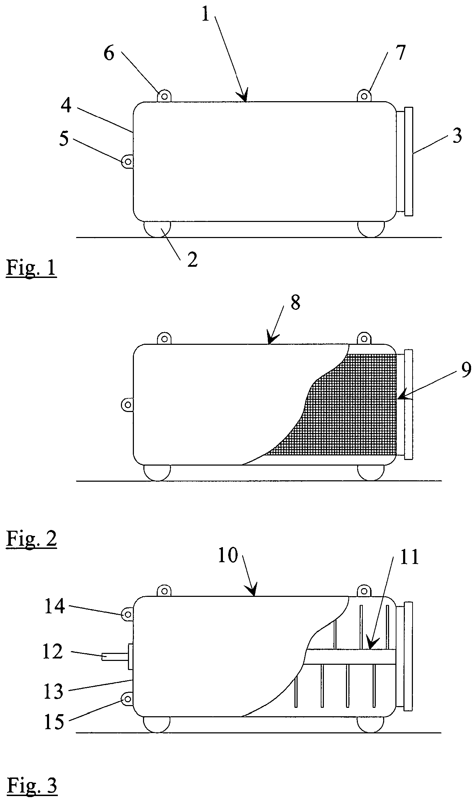

Der in Figur 1 in einer Seitenansicht dargestellte Prozesscontainer 1 ist tonnenartig ausgebildet auf Rädern oder Rollen 2 verfahrbar. Eine Stirnseite 3 ist mit einer gasdicht verschließbaren Befüllöffnung für die Abfälle versehen. Auf der der mit der Befüllöffnung 3 versehenen Stirnseite 3 gegenüberliegenden Stirnseite 4 ist als Anschluss für ein Zugmittel eine Öse 5 vorgesehen, in die ein Haken einer Kette oder eines Stahlseils für ein Ziehen oder Anheben für ein Entleeren des Prozesscontainers 1 durch die Befüllöffnung eingehängt werden kann.

Oberseitig des Prozesscontainers 1 sind zwei weitere Ösen 6,7 vorgesehen für ein Verlasten des Prozesscontainers 1 mit einem Hebezeug oder einem Kran.

Weniger voluminöses Material, wie es beispielsweise in der gummiverarbeitenden Industrie anfällt, wird in Prozesscontainern 8 eingebracht, die mit gitterartigen Einsätzen 9 versehen sind, so dass zwischen den einzelnen Materialbrocken ausreichend Platz für ein Entgasen verbleibt.

Für ein Ziehen oder Anheben des Prozesscontainers 10 für ein Entleeren weist die Stirnseite 13 weiter zwei Ösen 14,15 auf.

Unabhängig von der inneren Gestaltung sind die Prozesscontainer 1,8 und 10 im wesentlichen baugleich und insbesondere hitzebeständig, um den nachstehend weiter erläuterten Prozess unbeschadet zu überstehen.

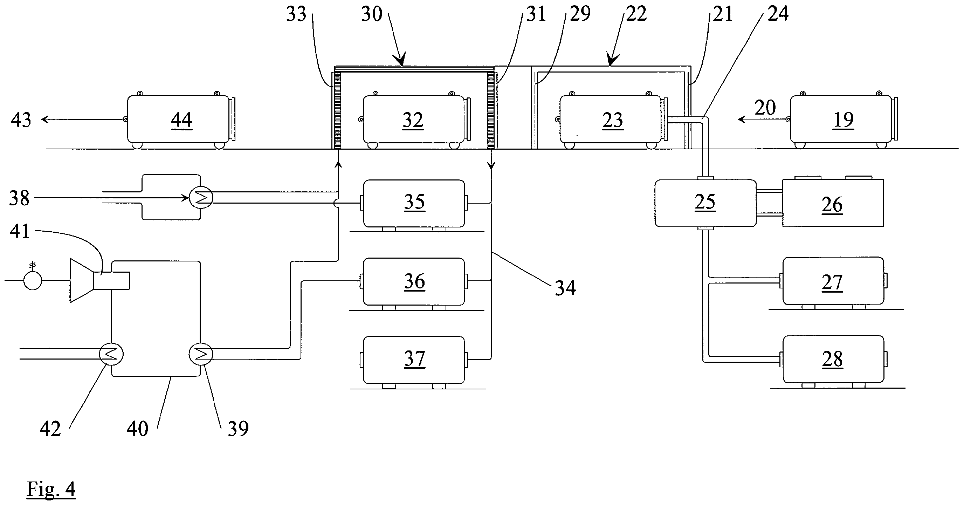

Figur 4 zeigt einen Prozesscontainer 19, wie er gemäß Pfeil 20 von einem weiter nicht dargestellten Zugmittel wie einer Kette oder einem Stahlseil durch ein angedeutetes Tor 21 in einem Prozessofen 22 gezogen wird. In dem Prozessofen 22 erfolgt eine Entgasung der in dem dort befindlichen Prozesscontainer 23 befindlichen Abfalls bei Temperaturen zwischen 300°C und 500°C, abhängig von dem zu entgasenden Material. Damit keine umweltschädlichen Gase austreten, weist der Prozesscontainer 23 ein nicht weiter dargestelltes Ventil auf, an das eine Rohrleitung 24 angeschlossen ist. In einem Behälter 25 von einer Kühlung 26 gekühlt und verflüssigt wird das so erhaltene, schwefelhaltige Öl in hier beispielsweise zwei Tanks 27,28 für eine spätere Weiterverwendung gesammelt.

Selbstverständlich können in dem System von Rohrleitungen 24, Behältern 25 und Tanks 27,28 übliche Stellglieder sowie Pumpen oder dergleichen vorgesehen sein.

Ist die Entgasung beendet, was durch geeignete Sensoren erfasst wird, wird ein weiteres, dem Tor 22 gegenüberliegendes Tor 29 des Prozessofens 22 geöffnet und der Prozesscontainer 23, von der Rohrleitung 24 gelöst, in eine Abkühlkammer 30 verbracht. Hierzu weist die Abkühlkammer 30 gegenüberliegend dem Tor 29 des Prozessofens 22 ein weiteres Tor 31 auf.

Da das Verbringen der Prozesscontainer 19,23 und des in der Abkühlkammer befindlichen Prozesscontainers 32 durch ein weiteres, dem Tor 31 der Abkühlkammer 30 gegenüberliegendes Tor 33 sehr schnell, insbesondere auch gleichzeitig, vonstatten geht, kann der Prozessofen 22 kontinuierlich beheizt werden.

Die Abkühlkammer 30 ist nach Art eines Wärmetauschers ausgebildet, mit einer Vielzahl von Rohrleitungen, angedeutet durch die Schraffur. Die Rohrleitungen bilden hier beispielhaft drei Kreisläufe 34 für Thermoöl aus, die vereinfacht dargestellt sind. Innerhalb der drei Kreisläufe 34 sind drei Thermospeicher 35-37 vorgesehen, die die Restwärme des Prozesscontainers 31 auf verschiedenen Temperaturniveaus abspeichern.

So kann beispielsweise der Thermospeicher 35 Prozesswärme von bis zu 120°C über einen Wärmetauscher 38 für Heizungszwecke der Räumlichkeiten abgeben.

Der zweite Thermospeicher 36 für Temperaturen zwischen 120°C und 300°C speist über einen Wärmetauscher 39, hier beispielhaft, einen Dampfkreislauf 40 für das Betreiben einer Dampfturbine 41, die mit einem Generator gekoppelt der Stromerzeugung dient.

Gegebenenfalls kann dem Dampfkreislauf 40 über einen weiteren Wärmetauscher 42 nochmals Prozesswärme entzogen werden.

Mit der bei dem Ausführungsbeispiel in dem Wärmespeicher 37 gespeicherten Wärme von über 300°C können die beiden voranstehend erläuterten Prozesse unterstützt werden oder kann die in diesem Thermospeicher 37 gespeicherte Wärme für die Beheizung des Prozessofens 22 zumindest mit herangezogen werden.

Ist der Prozesscontainer 31 ausreichend abgekühlt, wird er von einem Zugmittel gemäß Pfeil 43 bei dem Prozesscontainer 44 durch das Tor 33 zur Entleerung gezogen.

Insgesamt stellt sich der Prozess der Aufbereitung geschlossen dar. Umweltschädliche Emissionen werden nicht in die Umgebung entlassen. Vielmehr erfolgt, auch energetisch, ein optimales Ausnutzen vorhandener Ressourcen.

Dies gilt auch für die thermisch behandelten Abfälle selbst, wie nachstehend erläutert wird.

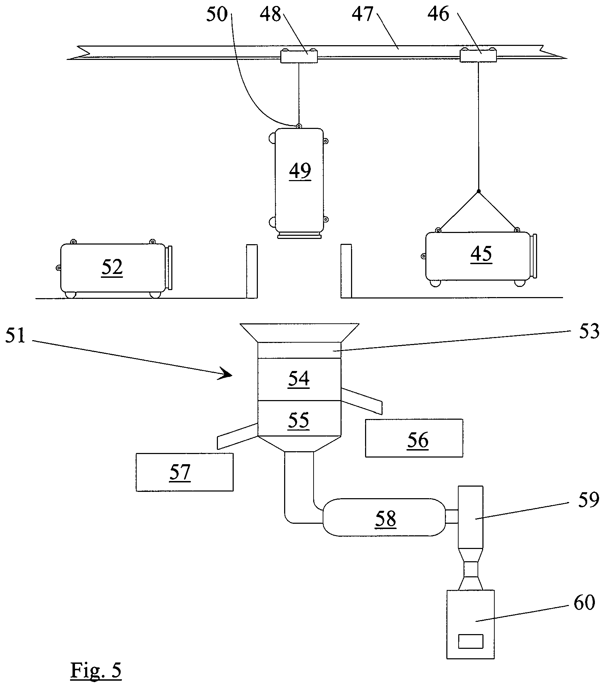

Alternativ zu einem Zugmittel kann gemäß Figur 5 ein Prozesscontainer 45 mittels eines Krans 46 oder eines anderes Hebezeugs transportiert werden. Insbesondere sind solche an Schienen 47 verfahrbare Laufkatzen auch für das Entladen eines Prozesscontainers 49 bestens geeignet, wie nachstehend erläutert wird.

An einer stirnseitigen Öse 50 von dem Kran 48 gehalten, kann die Entleerung des Prozesscontainers 49 durch seine Befüllöffnung aufgrund der Schwerkraft problemlos in einen Bunker oder dergleichen erfolgen oder, wie in Figur 5 dargestellt, in eine Trennvorrichtung 51.

Ist ein Prozesscontainer 52 geleert, steht dieser für einen erneuten Prozessdurchlauf zur Verfügung.

Lediglich angedeutet weist die Trennvorrichtung 51 einen Metallabscheider 53 auf, der metallische Fremdkörper wie beispielsweise Teile eines Stahlgürtels eines Autoreifens entfernt. Auf den Metallabscheider folgen bei dem Ausführungsbeispiel zwei Siebe 54,55.

Das Sieb 54 hält beispielsweise vergleichsweise grobe Teile von 3 cm³ bis 4 cm³ zurück, die in einem Sammelbehälter 56 für eine spätere Weiterverwendung gesammelt werden.

Aufgrund des erläuterten Prozesses kann die so erhaltene Aktivkohle ohne Bedenken weiterverarbeitet werden, da keine nachweisbaren Giftstoffe enthalten sind, wie gaschromatographische Untersuchungen aufgezeigt haben. Die Aktivkohle ist sehr sauber und von guter Qualität bei einer sehr großen Oberflächenstruktur.

So kann ohne weitere Behandlung die in dem Sammelbehälter 56 aufgefangene Aktivkohle zu einem Einsatz beispielsweise in großen Filteranlagen der Luftaufbereitung Verwendung finden wie auch in Abgasfiltern, beispielsweise in Schweißanlagen. Darüber hinaus bindet das Material in effektiver Weise Gerüche und ist sehr saugfähig, womit ein Einsatz beispielsweise auch im Bereich der Drucktechnik mit biologischen Farben erfolgen kann, um die sehr starken Gerüche zu binden.

Durch das zweite Sieb 55 werden Brocken einer Größe von 1 cm³ bis 2 cm³ ausgesiebt und einem weiteren Sammelbehälter 57 zugeführt. Dieses feinere Material ist bestens für einen Einsatz in relativ kleinen Filtern der Luftaufbereitung geeignet, beispielsweise in großen Büros, Wartezimmern von Arztpraxen oder dergleichen. Körperliche Ausdünstungen werden von dem Material ebenfalls bestens gebunden.

Die die Siebe 54,55 passierende feinste Fraktion wird einer Kugelmühle 58 noch zugeführt und kann zu einem Pulver zwischen 5 µm und 10 µm vermahlen werden, abhängig von dem Einsatzzweck. In Figur 5 ist ein Trommelsieb 59 noch schematisch angedeutet, das beispielsweise für ein feingemahlenes Pulver einer Korngröße von 5 µm durchlässig ist und größere Teilchen in die Kugelmühle 58 zurückführt.

Noch feineres Material erhält man, wenn das aus dem Trommelsieb 59 austretende Material noch einem Walzenstuhl 60 zugeführt wird. Die Teilchengröße nach dem Durchgang durch den Walzenstuhl 60 beträgt dann zwischen 0,1 µm und 0,5 µm.

Ein Pulver einer Teilchengröße von 10 µm kann als Füllstoff bei der Kunststoffherstellung verwendet werden. Ein Pulver einer Korngröße von weniger als 5 µm kann erneut in der Gummiherstellung Verwendung finden. In eine Rohgummimasse eingeknetet erfüllt dieses Material den selben Zweck wie Ruß und weist eine bessere Saugfähigkeit darüber hinaus auf.

Ein feines Pulver kann ferner als Pigment in der Farbindustrie Verwendung finden. Gegebenenfalls kann auch das feine Material aus dem Walzenstuhl 60 nochmals in einer Nassmühle feiner gemahlen werden.

## Patentansprüche

1. Verfahren der Aufbereitung von polymeren und/oder organischen Abfällen, welches die folgenden Schritte aufweist:
- dass ein hitzebeständiger und mit einem Ventil versehener Prozesscontainer (8, 23) mit geeignet vorbereiteten Abfällen in wenigstens einem gitterartigen Einsatz (9) gefüllt und gasdicht verschlossen wird,
- dass der Prozesscontainer (8, 23) mit den Abfällen für eine thermische Behandlung in einen Prozessofen (22) verbracht wird, dass während der thermischen Behandlung über das Ventil eine Entgasung der Abfälle erfolgt und dass über eine an das Ventil angeschlossene Rohrleitung (24) das Gas abgezogen wird, das abgekühlt und verflüssigt in Tanks (27,28) für eine Weiterverwendung zwischengelagert wird,
- dass unmittelbar nach der Entgasung der erhitzte Prozesscontainer aus dem Prozessofen (22) in eine Abkühlkammer(30) umgesetzt wird, in der die Restwärme dem Prozesscontainer (32) entzogen wird, und dass die Restwärme in einem Thermospeicher (35-37) als weiterverwendbare Prozesswärme abgespeichert wird, und
- dass nach einer erfolgten Abkühlung der Prozesscontainer der Abkühlkammer (30) entnommen und der Inhalt des Prozesscontainers (49) in eine Trennvorrichtung (51) entleert wird, indem
- an einem gegenüber einer Befüllöffnung angeordneten Anschluss (50) ein Hebezeug oder Kran (48) für ein Anheben und anschließendes Entleeren des Prozesscontainers (49) angreift.

2. Verfahren nach einem oder mehreren der vorangehenden Ansprüche, **dadurch gekennzeichnet, dass** die Abkühlkammer (30) nach Art eines Wärmetauschers ausgebildet mit einer Vielzahl von Rohren versehen ist, dass die Rohre wenigstens einen Kreislauf (34) für ein Thermalöl ausbilden und dass in dem Kreislauf des Thermalöls der Thermospeicher (35-37) vorgesehen ist.

3. Verfahren nach Anspruch 2, **dadurch gekennzeichnet, dass** dem wenigstens einen Thermospeicher (35-37) Prozesswärme entzogen wird.

4. Verfahren nach einem oder mehreren der vorangehenden Ansprüche, **dadurch gekennzeichnet, dass** der Prozesscontainer (8, 23) "stirnseitig einen Anschluss (5) für ein Zugmittel aufweist, dass der Prozesscontainer (19) von einem Zugmittel gezogen durch ein erstes Tor (21) in den Prozessofen (22) verbracht wird, dass nach der Entgasung der Prozesscontainer (23) von einem Zugmittel durch ein dem ersten Tor (21) des Prozessofens (22) gegenüber liegendes zweites Tor (29) durch ein gegenüber liegendes erstes Tor (31) in die Abkühlkammer (30) gezogen wird und dass nach der Abkühlung der Prozesscontainer (32) von einem Zugmittel durch ein dem ersten Tor (31) der Abkühlkammer (30) gegenüber liegendes zweites Tor (33) gezogen wird.

5. Verfahren nach einem oder mehreren der vorangehenden Ansprüche 1 bis 3, **dadurch gekennzeichnet, dass** der Prozesscontainer oberseitig wenigstens einen Anschluss für ein Hebezeug oder einen Kran aufweist, dass der Prozesscontainer von einem Hebezeug oder einem Kran angehoben durch ein erstes Tor in den Prozessofen verbracht wird, dass nach der Entgasung der Prozesscontainer von einem Hebezeug oder einem Kran durch ein dem ersten Tor des Prozessofens gegenüber liegendes zweites Tor durch ein gegenüber liegendes erstes Tor in die Abkühlkammer verbracht wird und dass nach der Abkühlung der Prozesscontainer von einem Hebezeug oder einem Kran durch ein dem ersten Tor der Abkühlkammer gegenüber liegendes zweites Tor verbracht wird.

6. Verfahren nach einem oder mehreren der vorangehenden Ansprüche, **dadurch gekennzeichnet, dass** der Prozessofen (23) und/oder die Abkühlkammer (30) kontinuierlich betrieben wird/werden.

7. Verfahren nach einem oder mehreren der vorangehenden Ansprüche, **dadurch gekennzeichnet, dass** die Trennvorrichtung (51) einen Metallabscheider (53) und Siebe (54,55) verschiedener Maschenweite aufweist, dass die feinste Fraktion einer Kugelmühle (58) zugeführt wird und dass das Mahlgut der Kugelmühle (58) über ein Sieb (59) einem Walzenstuhl (60) zugeführt wird.

## Claims

1. A method for the treatment of polymeric and/or organic waste, which comprises the following steps:
- filling a heat resistant processing container (8, 23), provided with a valve, with suitably prepared waste into at least one grid-like insert (9), and closing it in a gas-tight manner,
- introducing the processing container (8, 23) with the waste into a process furnace (22) for a thermal treatment such that during the thermal treatment, degassing of the waste is carried out via the valve, and withdrawing the gas via a pipeline (24) connected to the valve and temporarily storing it for further use in tanks (27, 28) after cooling and liquefying,
- immediately following degassing, moving the heated processing container from the process furnace (22) into a cooling chamber (30) in which the residual heat is withdrawn from the processing container (32), and storing the residual heat in a thermal store (35-37) as reusable process heat, and
- after cooling is complete, removing the processing container from the cooling chamber (30) and emptying the contents of the processing container (49) into a separating device (51), in which
- a lifting means or crane (48) is engaged at a connection (50) disposed opposite a filling opening for hoisting and subsequent emptying of the processing container (49).

2. The method as claimed in one or more of the preceding claims, **characterized in that** the cooling chamber (30) is configured in the manner of a heat exchanger provided with a plurality of tubes, **in that** the tubes form at least one circuit (34) for a thermal oil, and **in that** the thermal store (35-37) is provided in the circuit for the thermal oil.

3. The method as claimed in claim 2, **characterized in that** process heat is removed from the at least one thermal store (35-37).

4. The method as claimed in one or more of the preceding claims, **characterized in that** the end face of the processing container (8, 23) has a connection (5) for a traction means, **in that** the processing container (19) is drawn by a traction means through a first gate (21) into the process furnace (22), **in that** after degassing, the processing container (23) is drawn by a traction means through a second gate (29) which is positioned opposite to the first gate (21) of the process furnace (22), through an opposing first gate (31) into the cooling chamber (30), and **in that** after cooling, the processing container (32) is drawn by a traction means through a second gate (33) positioned opposite to the first gate (31) of the cooling chamber (30) .

5. The method as claimed in one or more of the preceding claims 1 to 3, **characterized in that** the top of the processing container has at least one connection for a lifting means or a crane, **in that** the processing container is hoisted by a lifting means or a crane and brought through a first gate into the process furnace, **in that** after degassing, the processing container is introduced by means of a lifting means or a crane through a second gate which is positioned opposite to the first gate into the cooling chamber through an opposing first gate, and **in that** after cooling, the processing container is brought by means of a lifting means or a crane through a second gate which is positioned opposite to the first gate of the cooling chamber.

6. The method as claimed in one or more of the preceding claims, **characterized in that** the process furnace (23) and/or the cooling chamber (30) is/are operated continuously.

7. The method as claimed in one or more of the preceding claims, **characterized in that** the separating device (51) has a metal separator (53) and sieves (54, 55) with a variety of mesh sizes, **in that** the finest fraction is supplied to a ball mill (58), and **in that** the milled material from the ball mill (58) is supplied to a roller mill (60) via a sieve (59).

## Revendications

1. Procédé, destiné à la préparation de déchets polymères et/ou organiques, lequel comporte les étapes suivantes, consistant :
- en ce qu'on remplit un conteneur d'opération (8, 23) résistant à la chaleur et muni d'une soupape de déchets préparés en conséquence dans au moins un insert (9) grillagé et on le ferme de manière étanche aux gaz,
- en ce qu'on amène le conteneur d'opération (8, 23) contenant les déchets pour un traitement thermique dans un four de processus (22), en ce que pendant le traitement thermique, il s'effectue un dégazage via la soupape et en ce que par l'intermédiaire d'une tuyauterie (24) raccordée sur la soupape, on soutire le gaz, qui refroidi et liquéfié est entreposé dans des citernes (27,28) pour une utilisation ultérieure,
- en ce que directement après le dégazage, on transfère le conteneur d'opération chauffé du four de processus (22) dans une chambre de refroidissement (30), dans laquelle la chaleur résiduelle est soutirée du conteneur d'opération (32), et en ce que la chaleur résiduelle est stockée dans un accumulateur thermique (35 à 37) en tant que chaleur de processus réutilisable, et
- en ce qu'une fois le refroidissement effectué, on retire le conteneur d'opération de la chambre de refroidissement (30) et en ce qu'on vide le contenu du conteneur d'opération (49) dans un dispositif séparateur (51) en ce que
- sur un raccord (50) placé au vis-à-vis d'un orifice de remplissage s'engage un engin de levage ou une grue (48) pour soulever et vider par la suite le conteneur d'opération (49).

2. Procédé selon l'une quelconque ou plusieurs des revendications précédentes, **caractérisé en ce que** la chambre de refroidissement (30) est conçue à la manière d'un échangeur thermique, pourvu d'une pluralité de tubes, **en ce que** les tubes forment au moins un circuit (34) pour une huile thermique et **en ce que** dans le circuit de l'huile thermique est prévu l'accumulateur thermique (35 à 37).

3. Procédé selon la revendication 2, **caractérisé en ce que** de la chaleur de processus est soutirée de l'au moins un accumulateur thermique (35 à 37).

4. Procédé selon l'une quelconque ou plusieurs des revendications précédentes, **caractérisé en ce que** le conteneur d'opération (8,23) comporte en face frontale un raccord (5) pour un moyen de traction, **en ce que** le conteneur d'opération (19), tiré par un moyen de traction est amené à travers un premier portail (21) dans le four de processus (22), **en ce qu'**après le dégazage, le conteneur d'opération (23) est tiré par un moyen de traction à travers un deuxième portail (29) opposé au premier portail (21) du four de processus (22) à travers un premier portail (31) opposé dans la chambre de refroidissement (30) et **en ce qu'**après le refroidissement, le conteneur d'opération (32) est tiré par un moyen de traction à travers un deuxième portail (33) opposé au premier portail (31) de la chambre de refroidissement (30).

5. Procédé selon l'une quelconque ou plusieurs des revendications précédentes 1 à 3, **caractérisé en ce que** le conteneur d'opération comporte en face supérieure au moins un raccord pour un engin de levage ou une grue, **en ce que** le conteneur d'opération, soulevé par un engin de levage ou une grue est amené à travers un premier portail dans le four de processus, **en ce qu'**après le dégazage, le conteneur d'opération est amené par un engin de levage ou une grue à travers un deuxième portail opposé au premier portail du four de processus à travers un premier portail opposé dans la chambre de refroidissement et **en ce qu'**après le refroidissement, le conteneur d'opération est amené par un engin de levage ou une grue à travers un deuxième portail opposé au premier portail de la chambre de refroidissement.

6. Procédé selon l'une quelconque ou plusieurs des revendications précédentes, **caractérisé en ce que** le four de processus (23) et/ou la chambre de refroidissement (30) fonctionne(nt) en continu.

7. Procédé selon l'une quelconque ou plusieurs des revendications précédentes, **caractérisé en ce que** le dispositif séparateur (51) comporte un séparateur de métaux (53) et des tamis (54, 55) de différent maillage, **en ce que** la fraction la plus fine est alimentée vers un broyeur à billes (58) et **en ce que** le produit broyé du broyeur à billes (58) est alimenté par l'intermédiaire d'un tamis (59) vers un moulin à cylindres (60).
